Europäisches Patentamt

(19) European Patent Office

Office européen des brevets

(11) Publication number: **0 120 594**

**B1**

(12) **EUROPEAN PATENT SPECIFICATION**

(45) Date of publication of patent specification: **22.06.88**

(51) Int. Cl.⁴: **F 15 C 3/14,** G 05 D 16/20, F 15 B 5/00

(21) Application number: **84301086.9**

(22) Date of filing: **20.02.84**

(54) Electro-pneumatic transducer assemblies.

(30) Priority: **24.02.83 US 469200**

(43) Date of publication of application:
**03.10.84 Bulletin 84/40**

(45) Publication of the grant of the patent:
**22.06.88 Bulletin 88/25**

(84) Designated Contracting States:
**DE FR GB IT**

(56) References cited:
**WO-A-80/01826
DE-A-1 935 110
FR-A-1 089 975
US-A-3 334 642
US-A-3 819 960
US-A-4 329 910**

**REGELUNGSTECHNISCHE PRAXIS, vol.19,
no.4, April 1977, pages M23-M24, München,
DE. "Signalumformer i-p-3"**

(73) Proprietor: **THE BABCOCK & WILCOX
COMPANY·
1010 Common Street P.O. Box 60035
New Orleans Louisiana 70160 (US)**

(72) Inventor: **Barnes, Christine Brobst
29047 Homewood Drive
Wickliffe Ohio 44092 (US)**

(74) Representative: **Cotter, Ivan John et al
D. YOUNG & CO. 10 Staple Inn
London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to electro-pneumatic transducer assemblies.

Electro-pneumatic transducer assemblies (converters) are known. Usually, a 4 to 20 mA electrical signal is used to actuate a solenoid-like motor. The 4 to 20 mA electrical signal causes a proportionate displacement in a spring-loaded core of the solenoid motor, which displacement is used to control a restriction of an associated pneumatic valve producing a pressure change proportional to the motion of the core. An example of such a device may be found in U.S. Patent No. 3 334 642 (Borthwick).

There are certain disadvantages to pneumatic servo assemblies of such electro-pneumatic transducer assemblies. Firstly, they are unable to hold position on loss of power. Should power be removed from the coil, the core moves back to a position where it is in equilibrium with its associated spring. This causes the pneumatic output signal to go off scale, resulting in the movement of control devices actuated by the electro-pneumatic transducer assembly to either fully-opened or fully-closed positions, which may be catastrophic under certain circumstances. Secondly, such pneumatic servo assemblies are vibration sensitive. Since the cores are suspended from springs which act as range and zero limiters, vibration of the core causes a variation in the pneumatic output signal. Also, there usually is no feedback of the pneumatic output signal to the input.

Our copending European Patent Application 84301085.1 (Publication No. EP—A—0 120 593), which forms part of the state of the art as regards the present application only by virtue of EPC Article 54(3), discloses an arrangement having some of the features of the arrangement disclosed and claimed hereinbelow.

U.S. Patent No. 4 329 910 discloses an electro-pneumatic transducer assembly for providing a pneumatic output signal that varies in response to an applied electrical signal, the transducer assembly comprising a pneumatic backpressure nozzle, a movable restriction for variably blocking the nozzle and thereby varying the nozzle backpressure, electric motor means coupled to the movable restriction to move the restriction with respect to the nozzle in response to the applied electrical signal to variably block the nozzle, and a bellows assembly arranged to expand or contract in response to variation in the nozzle backpressure. The electric motor means is a special form of electric motor having a stator in the form of a permanent magnet and a rotor in the form of a spring-restrained coil pivotally suspended about the magnet. Current applied to the coil induces rotation of the coil about the magnet in proportion to the current. The movable restriction comprises a so-called "flapper" which moves towards the coil when current is applied to the coil to change the back pressure. The pressure change is amplified and applied to the bellows, which moves the nozzle away from the flapper to maintain a constact distance between them.

According to a first aspect of the present invention there is provided an electro-pneumatic transducer assembly for providing a pneumatic output signal that varies in response to an applied electrical signal, the transducer assembly comprising:

a pneumatic backpressure nozzle;

a movable restriction for variably blocking the nozzle and thereby varying the nozzle backpressure;

electric motor means coupled to the movable restriction to move the restriction with respect to the nozzle in response to the applied electrical signal to variably block the nozzle; and

a bellows assembly arranged to expand or contract in response to variation in the nozzle backpressure;

characterised in that:

the movable restriction comprises a cam assembly which is rotatable to variably block the nozzle while being spaced at substantially the same linear distance from the nozzle;

the electric motor means is coupled by a shaft to the cam assembly for rotating the cam assembly;

a nozzle clamp is mounted on the nozzle and leading the cam assembly in an axial direction of the motor means for taking up any end play in the shaft of the electric motor means to maintain a substantially constant distance between the nozzle and the cam assembly and for exerting a drag on the cam assembly (23) to maintain a constant pneumatic output signal corresponding to the last electric input signal to the transducer assembly in response to an electrical failure; and

the nozzle and the bellows assembly are attached as a unit to a single pivot point allowing rotation of both as a unit around the pivot point in response to expansion or contraction of the bellows assembly so that the nozzle can be repositioned with respect to the edge of the cam assembly.

The electro-pneumatic transducer assembly as just defined is fail-safe in that, in the event of an electrical failure, it will maintain the output pressure occuring at the time of failure rather than going off scale. Also, the fact that the nozzle and bellows assembly are rotatable as a unit makes the transducer assembly resistant to vibration induced errors since the nozzle and bellows assembly move as a unit in response to vibration induced by external sources.

According to a second aspect of the invention there is provided an electro-pnuematic transducer system for providing a pneumatic output signal that varies in response to an electrical input signal, the transducer system comprising:

a pneumatic backpressure nozzle;

a movable restriction for variably blocking the nozzle and thereby varying the nozzle backpressure; and

motor means coupled to the movable restriction to move the restriction with respect to the nozzle to variably block the nozzle;

characterised in that:

the movable restriction comprises a cam assembly which is rotatable to variably block the nozzle;

actuating means is provided for actuating the motor means in response to a control signal;

means is provided for establishing a setpoint signal in response to an electrical input signal indicative of a desired pneumatic output signal;

means is provided for establishing a feedback signal indicating of the pneumatic output signal;

combining means is provided for comparing the setpoint signal with the feedback signal to establish a control signal for the actuating means, and

a nozzle clamp mounted on the nozzle and loading the cam assembly for exerting a drag on the cam assembly to maintain a constant pneumatic output signal from the transducer system corresponding to the last electrical input signal to the transducer system in response to an electrical failure.

The electro-pneumatic transducer system as just defined is fail-safe in that, in the event of an electrical failure, it will maintain the output pressure occurring at the time of the failure rather than going off scale. The exertion of a drag on the cam assembly by the nozzle clamp assists this process by impeding rotation of the cam assembly. Also, the electro-pneumatic transducer system incorporates a feedback signal which is compared with a setpoint signal to establish a control or error signal for actuation of the motor means, thereby achieving the advantages of closed loop, feedback-governed control of the pneumatic output signal.

A preferred embodiment of the present invention described in detail hereinbelow overcomes or at least alleviates the above-mentioned problems of known electro-pneumatic transducer assemblies by providing an electro-pneumatic transducer system that incorporates an electro-pneumatic transducer assembly comprising a pneumatic servo assembly and an electrically-driven direct current (DC) motor, the motor rotating a cam assembly of the pneumatic servo assembly to provide a variable restriction to a pneumatic nozzle of the pneumatic servo assembly, thereby providing a fail-safe device which will maintain the last electrical input signal to a control portion of the transducer system upon a loss of electrical power since the motor will stop in its last driven position. The DC motor-driven cam assembly provides a variable restriction to a pneumatic backpressure nozzle, thus allowing the nozzle to supply a spring-loaded bellows assembly which produces a 20.7 to 103.4kPa (3 to 15 lbf/in² or "psi") pneumatic output signal also providing a feedback signal. The feedback signal is used, in the control portion of the transducer system, to produce an error signal between a set point signal determined by a 4 to 20 mA electrical input signal and the feedback signal to the pneumatic output as sensed by a pressure transducer changing this pneumatic feedback signal to an electrically-equivalent signal. Advantages of the preferred embodiment are that it will maintain the last pneumatic output upon a loss of electric power, that it is insensitive to vibration of the pneumatic servo assembly, and that it provides a feedback signal to the (electronic) control portion of the transducer system producing an error signal for driving the restriction of the pneumatic servo assembly.

The invention will now be further described, by way of illustrativae and non-limiting example, with reference to the accompanying drawings, in which:

Figure 1 is a functional block diagram of an electro-pneumatic transducer system;

Figure 1a is an exposed view of a motor-driven cam and backpressure nozzle of a pneumatic servo assembly of the system of Figure 1;

Figure 2 is a functional block diagram of part of the transducer system of Figure 1;

Figure 3 is a detailed side view of a bellows and spring assembly of Figure 2;

Figure 4 is a detailed end view of the bellows and spring assembly of Figure 3; and

Figure 5 is a detailed end view of a cam assembly of Figure 2.

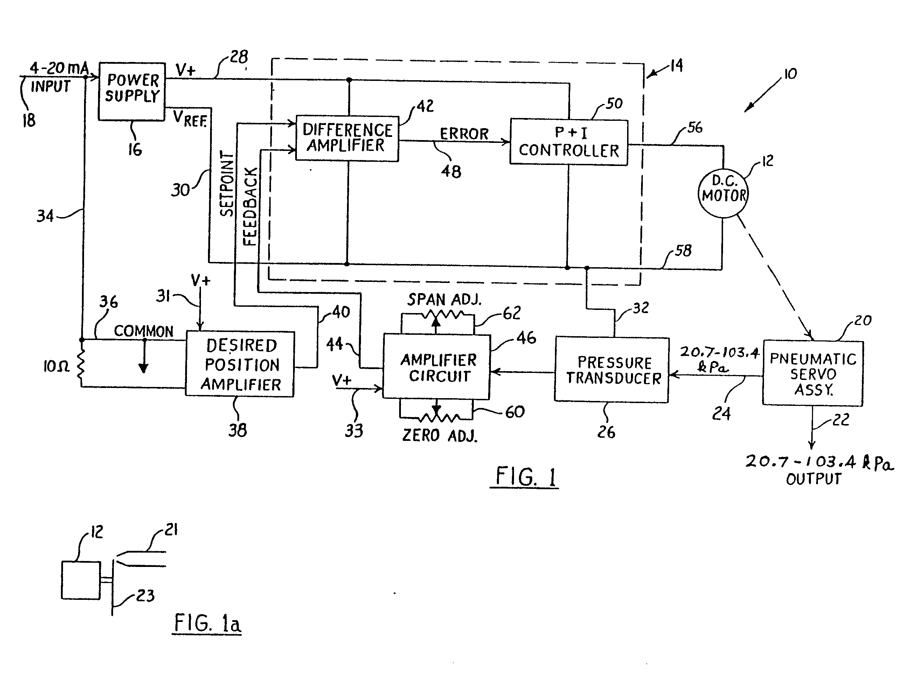

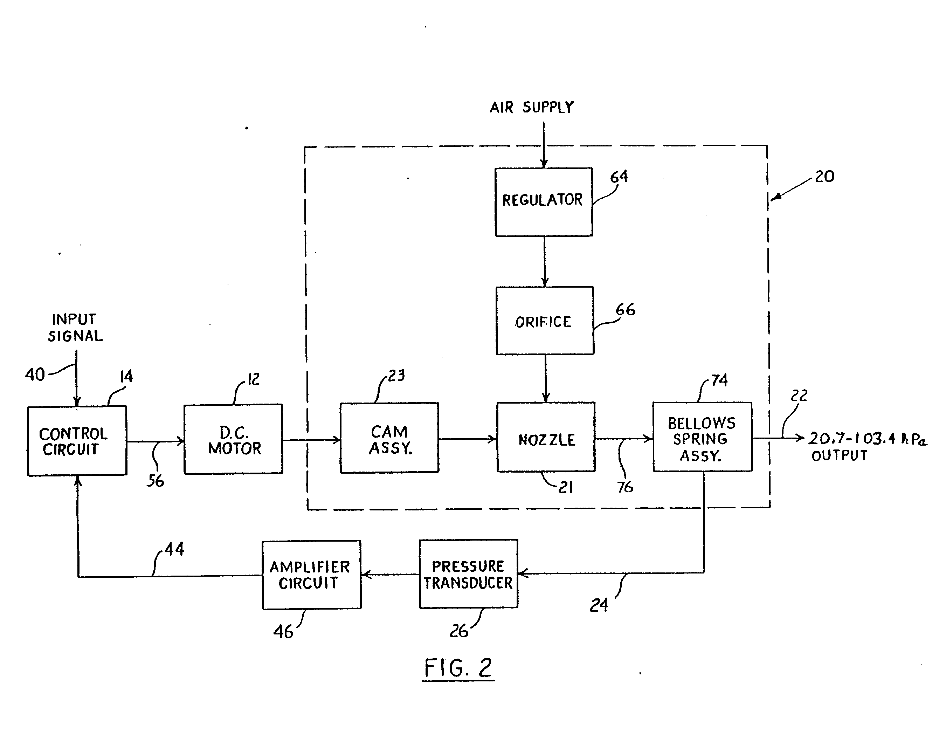

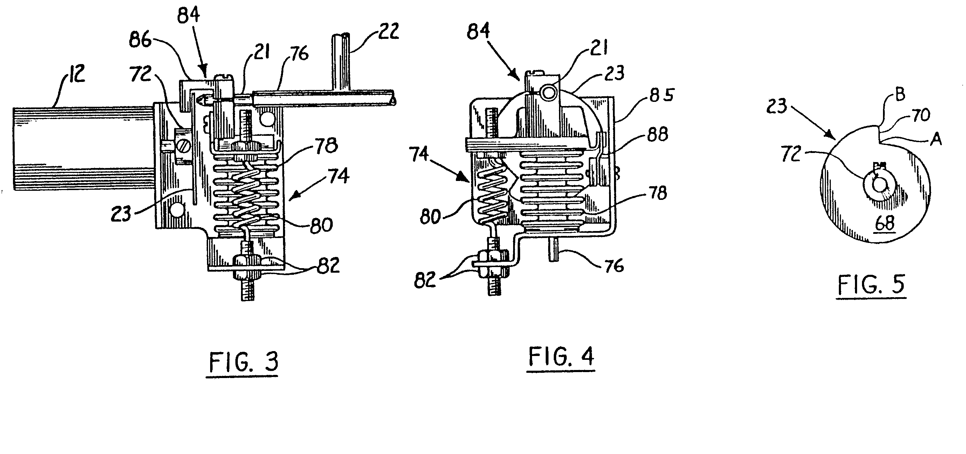

Referring now to the drawings, Figures 1 and 1a show an electro-pneumatic transducer system 10 which comprises an electro-pneumatic transducer assembly (constituted by a DC motor 12 and a pneumatic servo assembly or mechanism 20) and a closed loop feedback control arrangement for the transducer assembly. The DC motor 12 is controlled by an electronically-controlled motor servo circuit or assembly 14 which is powered by a power supply 16 operated from a 4 to 20 mA input control signal connected to the power supply 16 along a line 18. The DC motor 12 is mechanically constrained to the pneumatic servo assembly or mechanism 20 which has a backpressure nozzle 21 variably restricted by a cam assembly 23 connected to and driven by the DC motor 12 to thus provide a variable backpressure output along an output line 22 of the pneumatic serve assembly 20, normally in a 20.7 to 103.4 kPa (3 to 15 lbf/in²) output range. This 20.7 to 103.4 kPa (3 to 15 lbf/in²) output is linear and corresponds to the linear 4 to 20 mA electrical input provided along the input line 18. The same 20.7 to 103.4 kPa (3 to 15 lbf/in²) output is also sent along a line 24 to a pressure transducer 26 which provides a feedback signal used in determining control of the DC motor 12 as will be described more fully hereinbelow.

To allow the DC motor 12 to be operated bidirectionally without the need for dual polarity voltages, the power supply 16 establishes dual voltages V+ and $V_{ref}$ along power lines 28 and 30, respectively. The V+ and voltage is in the range of 6.4 volts nominal and powers the motor servo circuit 14, as well as powering a desired position amplifier 38 and an amplifier circuit 46, along input lines 31 and 33, respectively. The $V_{ref}$ voltage from the power supply 16 is transmitted along the line 30 to bias up the motor servo circuitry 14 and power the pressure transducer 26 along a line 32.

To establish a set point from the 4 to 20 mA input signal to which the appropriate 20.7 to 103.4 kPa (3 to 15 lbf/in$^2$) output will have to be supplied from the output line 22, the particular electrical input signal is sent along a line 34 to a 10 ohm precision resistor located between the circuit common at a line 36 and an input to the desired position amplifier 38. The precision 10 ohm resistor senses the particular current level and establishes a voltage drop across itself. That voltage drop provides a counterpart voltage input to the positon amplifier 38. The position amplifier 38 raises the input signal level to a predetermined level and sends it along a line 40 to a difference amplifieer 42 as a set point signal compatible with the level of a feedback signal also provided to the difference amplifier 42. The difference amplifier 42 is the first stage of the motor servo circuit 14. The second input to the difference amplifier 42 is the feedback signal, which is provided on a line 44 from the amplifier circuit 46 which scales and zeroes the pressure signal provided by the pressure transducer 26 which acts as pneumatic-to-electrical converter for the 20.7 to 103.4 kPa (3 to 15 lbf/in$^2$) output signal established at the output line 22.

The difference amplifier 42 sensed any deviation of the feedback signal on the line 44 from the established set point signal on the line 40 and establishes an error signal on a line 48, which error signal is an amplified difference signal so long as each difference between the set point signal and feedback signal is maintained. This amplified error signal is supplied to an input of a proportional and integral (P & I) controller 50 where it is integrated and scaled up or down with respect to $V_{ref}$.

Thus, bi-directional rotation of the motor 12 is achieved by the voltage output of the proportional plus integral controller 50 rising or falling below the voltage reference $V_{ref}$. When the output signal is above the voltage reference $V_{ref}$, the current through the motor 12 will drive the motor 12 in first rotational direction. When the voltage output of the proportional plus integral controller 50 is equal to $V_{ref}$, no current flows through the motor and the motor is stationary. If the output voltage drops below $V_{ref}$, the rotation of the motor 12 will reverse to a second rotational direction due to the voltage level applied to it crossing the $V_{ref}$ point.

The amplifier circuit 46 has both a zero adjustment 60 and a span adjustment 62. The zeor and span adjustments 60 and 62 allow the feedback signal to be adjusted to respond over a variety of ranges. The predominant pressure range and pressure starting or zero point that the feedback will be adjusted for is the 20.7 to 103.4 kPA (3 to 15lbf/in$^2$) signal, which is a standard for pneumatic instrumentation as 4 to 20 mA is a standard for electrical instrumentation. Other ranges are also available and may be set, including any 50 per cent split range desired (i.e. 0 per cent to 20.7 kPa (3 lbf/in$^2$) and 100 per cent is 62.1 kPa (9 lbf/in$^2$)).

Should an electrical failure occur in the system 10, the DC motor 12 would stop with the cam assembly 23 remaining in its last position to provide the same backpressure restriction from the nozzle 21 to the pneumatic servo assembly 20, and the last conforming pressure output signal would be maintained along the output line 22 by the pneumatic servo assembly 20.

Referring now to Figure 2, the pneumatic servo assembly or mechanism 20 is seen to include a regulator 64 which is connected to an air supply or unregulated high pressure air and acts to reduce the air supply pressure to a constant clean, low pressure or 151.7 + 13.8 kPa (22 + 2 lbf/in$^2$). The filtered regulated air from the regulator 64 is piped to the backpressure nozzle 21 by way of an orifice 66. As is known to those skilled in the pneumatic control art, the size of the orifice 66, in conjunction with the opening of the backpressure nozzle 21, act to determine the air consumption as well as response time of the pneumatic servo assembly or mechanism 20.

As was previously described, the motor servo circuit 14 causes the DC motor 12 to be rotated in either a clockwise or anticlockwise direction, which direction is dictated by a comparison of the set point and the feedback signals supplied to the control circuit 14 which acts to thus control the DC motor 12. The rotation of the motor 12 causes the cam assembly 23, which may be seen from Figure 5, to rotate with respect to the backpressure nozzle 21, causing a relative blockage or opening in the backpressure nozzle 21.

With particular reference to Figure 5, it will be seen that the cam assembly 23, shown as the typical 20.7 to 103.4 kPA (3 to 15 lbf/in$^2$) output cam assembly 23, is formed as a spiral-generated plane of plane section 68 having a notched portion 70 with a hub 72 located in the centre of the spiral plane 68. The spiral is formed to produce a linear function pressure output from the output line 22 from the backpressure nozzle 21. By way of example, when the nozzle 21, which will always seek the edge of the plane 68 aligned therewith, is positioned at a point A, a 20.7 kPa (3 lbf/in$^2$) output will be produced. Similarly, at a point B, a 103.4 kPa (15 lbf/in$^2$) output will be produced. Angularly linear outputs will be produced between the points A and B. Thus, the height of the notch 70 is the range of the output signal. The hub 72 is used to mount the cam assmbly 23 to the shaft of the DC motor 12. Referring now to Figures 2 to 4, it will be seen that restricting the backpressure nozzle 21 causes an increase in backpressure which is piped to a bellows spring assembly 74 via a line 76. There is a directly-proportional relationship between the pressure in the bellows spring assembly 74 and the height to which it will expand. This is determined by the construction of a bellows 78 of the assembly 74, as well as a spring 80 which is mounted in parallel with the bellows 78. The spring 80 acts to limit the motion of the bellows 78, thereby limiting the output range of the pneumatic output signal along the line 22 to a desired range which is determined by adjusting the spring pressure of the spring 80 by either extending or loosening the spring 80 and setting it in that particular position by way of adjusting nuts 82. Thus, the nuts 82 may be used to provide fine adjustment to the particular output pressure range desired. Should a different pressure range be desired, such as 20.7 to 186.2 kPa (3 to 27 lbf/in$^2$), the spring 80 may be replaced by a different spring having a different spring coefficient.

With particular reference to Figures 3 and 4, it will be seen that the backpressure nozzle 21 is rigidly mounted to a bracket assembly 84 to which the bellows 78 and the spring 80 are also mounted. The bracket assembly 84 is then mounted to a stationary frame member 85 through a hinge 88 to thus allow rotational motion of the backpressure nozzle 21 and the bellows 78 and sping 80 around a pivot point constituted by the hinge 88.

This mounting of the backpressure nozzle 21, bellows 78, and spring 80 as a single unit makes the pneumatic servo assembly 20 impervious to vibration induced errors by allowing the entire assembly to move as a single unit in response to any vibration induced by external sources into the pneumatic servo assembly 20.

In operation, it will be seen that as the motor 12 and the cam assembly 23 rotate to variably restrict the backpressure nozzle 21, the bellows 78 will expand causing a pivoting of the previously-mentioned assembly around the pivot point 88 until the backpressure nozzle 21 reaches a position along the edge of the cam plane 68 producing a backpressure feedback signal which will balance the set point signal and stop the rotation of the motor 12 and cam assembly 23. This will result in an output pressure signal along the line 22 which is proportional to the electrical input signal which originally had caused the DC motor 12 to rotate.

As may be seen, there is no mechanical contact between the backpressure nozzle 21 and the cam assembly 23. Therefore, to rotate the DC motor 12 need only overcome its own internal friction along with a small amount of drag on the cam assembly 23 which may be caused by a nozzle clamp 86. The nozzle clamp 86 rides on the cam assembly 23, loading it away from the motor 12 to thus take up any play in the shaft of the motor 12. This force is minimal and there are no forces developed which will turn the motor 12 off. If the motor 12 and the cam assembly 23 do not turn clearly the backpressure output along the line 22 will not change.

**Claims**

1. An electro-pneumatic transducer assembly for providing a pneumatic output signal (22) that varies in response to the applied electrical signal (56), the transducer assembly (12, 20) comprising:

a pneumatic backpressure nozzle (21);

a movable restriction (23) for variably blocking the nozzle (21) and thereby varying the nozzle backpressure;

electric motor means (12) coupled to the movable restriction (23) to move the restriction (23) with respect to the nozzle (21) in response to the applied electrical signal (56) to variably block the nozzle; and

a bellows assembly (74) arranged to expand or contract in response to variation in the nozzle backpressure;

characterised in that:

the movable restriction (23) comprises a cam assembly which is rotatable to variably block the nozzle (21) while being spaced at substantially the same linear distance from the nozzle;

the electric motor means (12) is coupled by a shaft to the cam assembly (23) for rotating the cam assembly;

a nozzle clamp (86) mounted on the nozzle (21) and loading the cam assembly (23) in an axial direction of the motor means (12) for taking up any play in the shaft of the electric motor means (12) to maintain a substantially constant distance between the nozzle (21) and the cam assembly (23) and for exerting a drag on the cam assembly (23) to maintain a constant pneumatic output signal (22) corresponding to the last electric input signal to the transducer assembly in response to an electrical failure and

the nozzle (21) and the bellows assembly (74) are attached as a unit to a single point (88) allowing rotation of both as a unit around the pivot point (88) in response to expansion or contraction of the bellows assembly so that the nozzle (21) can be repositoned with respect to the edge of the cam assembly (23).

2. A transducer assembly according to claim 1, wherein the nozzle clamp (86) comprises a member having one end mounted to the backpressure nozzle (21) and an opposite end in contact with the cam assembly (23) on a side thereof opposite to the backpressure nozzle (21) so as thereby to take up any end play in the shaft of the electric motor means (12).

3. A transducer assembly according to claim 1 or claim 2, wherein the bellows assembly (74) includes a bellows (78) and an adjustable spring (80) connected in parellel with the bellows to adjust the output from the bellows assembly.

4. A transducer assembly according to claim 3, wherein the backpressure nozzle (21) is rigidly attached to the bellows assembly (74) to move simultaneously with the bellows assembly.

5. A transducer assembly according to any one of claims 1 to 4, wherein the motor means is a DC motor (12).

6. A transducer assembly according to claim 5, wherein the cam assembly (23) comprises a flat, substantially spiral-generated plane (68) having a spiral generating centre mounted hub (72) for mounting the cam assembly to the motor means (12).

7. An electro-pneumatic transducer system for providing a pneumatic output signal (22) that varies in response to an electrical input signal (18), the transducer system comprising:

a pneumatic backpressure nozzle (21);

a movable restriction (23) for variably blocking the nozzle (21) and thereby varying the nozzle backpressure; and

motor means (12) coupled to the movable restriction (23) to move the restriction (23) with respect to the nozzle (21) to variably block the nozzle;

characterised in that:

the movable restriction (23) comprises a cam assembly which is rotatable to variably block the nozzle (21);

actuating means (50) is provided for actuating the motor means (12) in response to a control signal (48);

means (38) is provided for establishing a setpoint signal in response to an electrical input signal (18) indicative of a desired pneumatic output signal;

means (26, 46) is provided for establishing a feedback signal indicating of the pneumatic output signal;

combining means (42) is provided for comparing the setpoint signal with the feedback signal to establish a control signal for the actuating means (50), and

a nozzle clamp (86) mountd on the nozzle (21) and loading the cam assembly (23) for exerting a drag on the cam assembly (23) to maintain a constant pneumatic output signal (22) from the transducer system corresponding to the last electrical input signal to the transducer system in response to an electrical failure.

8. A transducer system according to claim 7, wherein the feedback signal establishing means (26, 46) comprise a pressure transducer (26) operative to measure the pneumatic output signal from the transducer system and establish an electrical signal representative thereof.

9. A transducer system according to claim 8, wherein the feedback signal establishing means (26, 46) includes an amplifier circuit (46) having a span and zero adjustment (62, 60) to allow the pneumatic output signal from the transducer system to be scaled to a desired range of output pressures from a desired starting pressure.

10. A transducer system according to claim 7, claim 8 or claim 9, wherein the motor means is a DC motor (12).

11. A transducer system according to any one of claims 7 to 10, wherein the cam assembly (23) comprises a flat, substantially spiral-generated plane (68) having a generating centre mounted hub (72) for mounting the cam assembly (23) to the motor means (12).

12. A transducer system according to any one of claims 7 to 11, wherein the backpressure nozzle (21) is connected to a bellows assembly (74) to pressurise the bellows assembly in response to the pressure from the backpressure nozzle.

13. A transducer assembly according to claim 12, wherein the bellows assembly (74) has an output connected to the feedback signal establishing means (26, 46).

14. A transducer assembly according to claim 12 or claim 13, wherein the bellows assembly (74) includes a bellows (78) and an adjustable spring (80) connected in parallel with the bellows to adjust the output from the bellows assembly.

15. A transducer assembly according to any one of claims 12 to 14, wherein the backpressure nozzle (21) is rigidly attached to the bellows assembly (74) to move simultaneously with the bellows asssembly.

16. A transducer assembly according to any one of claims 12 to 15, whering the backpressure nozzle (21) and bellows assembly (74) are attached as a unit to a single pivot point (88) allowing the rotation of both as a unit around the pivot in response to expansion or contraction of the bellows assembly.

17. A transducer assembly according to any one of claims 7 to 16, wherein the nozzle clamp (86) comprises a member having one end mounted to the backpressure nozzle (21) and an opposite end in contact with the cam assembly (23) on a side thereof opposite to the backpressure nozzle so as thereby to exert a drag on the cam assembly (23).

**Patentansprüche**

1. Elektropneumatische Umformeranordnung zur Schaffung eines pneumatischen Ausgangssignals (20), welches in Abhängigkeit von einem angelegten elektrischen Signal (56) variiert, wobei die Umformeranordnung (12, 20) aufweist:

eine pneumatische Gegendruckdüse (21);

eine bewegliche Begrenzung (23) zum veränderlichen Blockieren der Düse (21) und dadurch Verändern des Düsengegendruckes;

Elektromotormittel (12), die mit der beweglichen Begrenzung (23) gekoppelt sind, um die Begrenzung bezüglich der Düse (21) in Abhängigkeit von dem angelegten elektrischen Signal (56) zu bewegen und die Düse veränderlich zu blockieren; und

eine Balganordnung (74), die angeordnet ist, um sich in Abhängigkeit von der Veränderung des Düsengegendruckes auszudehnen oder zusammenzuziehen;

dadurch gekennzeichnet, daß:

die bewegliche Begrenzung (23) eine Nockenanordnung aufweist, die drehbar ist, um die Düse (21) veränderlich zu blockieren, währen sie im wesentlichen in demselben linearen Abstand von der Düse angeordnet ist;

das Elektromotormittel (12) durch eine Welle mit der Nockkenanordnung (23) für die Drehung der Nockenanordnung gekuppelt ist;

eine Düsenklemmvorrichtung (86) auf der Düse (21) angebracht ist und die Düsenanordnung (23) in einer axialen Richtung des Motormittels (12) belastet, um jedes Enspiel in der Welle des Elektromotormittels (12) aufzunehmen und einen im wesentlichen konstanten Abstand zwischen der Düse (21) und der Nockenanordnung (23) zu halten, und zum Ausüben eines Rücktriebes auf die Nockenanordnung (23), um ein konstantes pneumatisches Ausgangssignal (22) aufrechtzuerhalten, welches dem letzten elektrischen Eingangssignal zu Umformeranordnung in Abhängigkeit von einem elektrischen Ausfall entspricht; und

die Düse (21) und die Balganordnung (74) als eine Einheit an einer einzigen Drehstelle (88) angebracht sind mit der Ermöglichung der Drehung beider als eine Einheit um die Drehstelle (88) herum in Abhängigkeit von der Ausdehnung oder dem Zusammenziehen der Balganordnung, so daß die Düse (21) bezüglich der Kante der Nockenanordnung (23) zurückgestellt werden kann.

2. Umformeranordnung nach Anspruch 1, wobei die Düsenklemmvorrichtung (86) ein Teil aufweist, dessen eines Ende an der Gegendruckdüse (21) angebracht ist und dessen gegenüberliegendes Ende in Berührung mit der Nockenordnung (23) auf ihrer eine Seite gegenüber der Gegendruckdüse (21) ist, um dadurch jedes Endspiel in der Welle des Elektromotormittels (12) aufzunehmen.

3. Umformeranordnung nach Anspruch 1 oder Anspruch 2, wobei die Balganordnung (74) einen Balg (78) und eine einstllbare Feder (80) aufweist, die parallel zum Balg verbunden ist, um die Ausgangsgröße aus der Balganordnung einzustellen.

4. Umformeranordnung nach Anspruch 3, wobei die Gegendruckdüse (21) starr an der Balganordnung (74) angebracht ist, um sich gleichzeitig mit der Balganordnung zu bewegen.

5. Umformeranordnung nach einem der Ansprüche 1 bis 4, wobei das Motormittel ein Gleichstrommotor (12) ist.

6. Umformeranordnung nach Anspruch 5, wobei die Nockenanordnung (23) eine flache, im wesentlichen durch eine Spirale erzeugte Ebene (68) aufweist mit einer eine Spirale erzeugenden, mittig angeordneten Nabe (72) zur Anbringung der Nockenanordnung am Motormittel (12).

7. Elektropneumatisches Umformersystem zur Schaffung eines pneumatischen Ausgangssignales (22), welches in Abhängigkeit von einem elektrischen Eingangssignal (18) variiert, wobei das Umformersystem aufweist:

eine pneumatische Gegendruckdüse (21);

eine bewegliche Begrenzung (23) für das variable Blockieren der Düse (21) und dadurch Verändern des Düsengegendruckes; und

Motormittel (12), die an der bewegbaren Begrenzung (23) gekoppelt sind, um die Begrenzung (23) bezüglich der Düse (21) zu bewegen und die Düse variabel zu blockieren;

dadurch gekennzeichnet, daß

die bewegbare Begrenzung (23) eine Nockenanordnung aufweist, die drehbar ist, um die Düse (21) variable zu blockieren;

Betätigungsmittel (50) vorgesehen sind für das Betätigen des Motormittels (12) in Abhängigkeit von einem Steuersignal (48);

ein Mittel (38) vorgesehen ist zur Bildung eines Sollwertsignals in Abhängigkeit von einem elektrischen Eingangssignal (18) unter Anzeige des gewünschten pneumatischen Ausgangssignals;

ein Mittel (26, 46) vorgesehen ist zur Bildung eines Rückführungssignals unter Anzeige des pneumatischen Ausgangssignales;

ein Vereinigungsmittel (42) vorgesehen ist für das Vergleichen des Sollwertsignals mit dem Rückführungssignal, um ein Steuersignal für das Betätigungsmittel (50) zu bilden; und

eine Düsenklemmvorrichtung (86) auf der Düse (21) angebracht ist und die Nockenanordnung (23) belastet, um einen Rücktrieb auf die Nockenanordnung (23) auszuüben und ein konstantes pneumatisches Ausgangssignal (22) von dem Umformersystem entsprechend dem letzten elektrischen Eingangssignal zum Umformersystem in Abhängigkeit von einem elektrischen Ausfall aufrechtzuerhalten.

8. Umformersystem nach Anspruch 7, wobei das das Rückführungssignal bildende Mittel (26, 46) einen Druckumformer (26) aufweist, der betrieblich so vorgesehen ist, daß er das pneumatische Ausgangssignal aus dem Umformersystem mißt und ein dafür repräsentatives elektrisches Signal bildet.

9. Umformersystem nach Anspruch 8, wobei das das Rückführungssignal bildende Mittel (26, 46) eine Verstärkerschaltung (46) aufweist mit einer Meßbereich- und Nulleinstellung (62, 60), um für das pneumatische Ausgangssignal aus dem Umformersystem die Möglichkeit zu schaffen, maßstäblich auf einen Bereich von Ausgangsdrücken von einem gewünschten Anfangsdruck geändert zu werden.

10. Umformersystem nach Anspruch 7, Anspruch 8 oder Anspruch 9, wobei das Motormittel ein Gleichstrommotor (12) ist.

11. Umformersystem nach einem der Ansprüche 7 bis 10, wobei die Nockenanordnung (23) eine flache, im wesentlichen von einer Spirale erzeugten Ebene (68) aufweist mit einer erzeugenden, mittig angebrachten Nabe (72) zur Anbringung der Nockenanordnung (23) an dem Motormittel (12).

12. Umformersystem nach einem der Ansprüche 7 bis 11, wobei die Gegendruckdüse (21) mit einer Balganordnung (74) verbunden ist, um die Balganordnung in Abhängigkeit von dem Druck von der Gegendruckdüse unter Druck zu setzen.

13. Umformeranordnung nach Anspruch 12, wobei die Balganordnung (74) einen Ausgang hat, der mit dem das Rückführungssignal bildenden Mittel (26, 46) verbunden ist.

14. Umformeranordnung nach Anspruch 12 oder Anspruch 13, wobei die Balganordnung (74) einen Balg (78) und eine einstellbare Feder (80) aufweist, die parallel zu dem Balg angeschlossen ist, um das Ausgangssignal aus der Balganordnung einzustellen.

15. Umformeranordnung nach einem der Ansprüche 12 bis 14, wobei die Gegendruckdüse (21) starr an der Balganordnung (74) angebracht ist, um sich gleichzeitig mit der Balganordnung zu bewegen.

16. Umformeranordnung nach einem der Ansprüche 12 bis 15, wobei die Gegendruckdüse (21) und die Balganordnung (74) als eine Einheit an einer einzigen Schwenkstelle (88) angebracht sind, wodurch die Drehung beider als eine Einheit um die Schwenkstelle herum in Abhängigkeit von der Ausdehnung oder dem Zusammenziehen der Balganordnung ermöglicht wird.

17. Umformeranordnung nach einem der Ansprüche 7 bis 16, wobei die Düsenklemmvorrichtung (86) ein Teil aufweist, dessen eines Ende an der Gegendruckdüse (21) angebracht ist und dessen gegenüberliegendes Ende in Kontakt mit der Nockenanordnung (23) auf ihrer einen Seite entgegen der Gegendruckdüse ist, um dadurch einen Rücktrieb auf die Nockenanordnung (23) auszuüben.

**Revendications**

1. Transducteur électro-pneumatique en vue de délivrer un signal de sortie pneumatique (22) variant en réponse à un signal électrique appliqué (56), le transducteur (12, 20) comportant:
un ajutage de contre-pression pneumatique (21);
un rétrécissement mobile (23) en vue de bloquer de façon variable l'ajutage (21) et ainsi modifier la contre-pression d'ajutage;
un moteur électrique (12) couplé au rétrécissement mobile (23) pour déplacer le rétrécissement (23) par rapport à l'ajutage (21) en réponse au signal électrique appliqué (56) en vue de bloquer de façon variable l'ajutage; et
un ensemble de soufflet (74) agencé pour se dilater ou se contracter en réponse à une variation de contre-pression d'ajutage;
caractérisé en ce que:
le rétrécissement mobile (23) comporte une came pouvant tourner pour bloquer de façon variable l'ajutage (21) tout en étant espacé à sensiblement la même distance linéaire de l'ajutage;
le moteur électrique (12) est couplé par un arbre à la came (23) en vue de la faire tourner;
une fixation d'ajutage (86) montée sur l'ajutage (21) et chargeant la came (23) dans une direction axiale du moteur (12) en vue d'absorber tout jeu terminal de l'arbre du moteur électrique (12) en vue de maintenir une distance sensiblement constante entre l'ajutage (21) et la came (23) et en vue d'exercer une friction sur la came (23) pour maintenir un signal de sortie pneumatique (22) constant correspondant au dernier signal électrique d'entrée au transducteur en réponse à une panne électrique; et
l'ajutage (21) et l'ensemble de soufflet (74) sont fixés en un ensemble à un seul point de pivotement (88) permettant une rotation de l'ensemble des deux autour du point de pivotement (88) à la suite d'une dilatation ou d'une contraction de l'ensemble de soufflet de sorte que l'ajutage (21) peut être repositionné par rapport au bord de la came (23).

2. Transducteur selon la revendication 1, dans lequel la fixation (86) d'ajutage comporte un élément ayant une extrémité montée sur l'ajutage (21) de contre-pression et une extrémité opposée en contact avec la came (23) sur un côté de celle-ci opposé à l'ajutage de contre-pression (21) de façon à absorber tout jeu terminal de l'arbre du moteur électrique (12).

3. Transducteur selon la revendication 1 ou la revendication 2, dans lequel l'ensemble de soufflet (74) possède un soufflet (78) et un ressort réglable (80) monté en parallèle sur le soufflet pour régler la sortie de l'ensemble de soufflet.

4. Transducteur selon la revendication 3, dans lequel l'ajutage de contre-pression (21) est fixé de façon rigide à l'ensemble de soufflet (74) pour se déplacer simultanément avec lui.

5. Transducteur selon une quelconque des revendications 1 à 4, dans lequel le moteur est une moteur à courant continu (12).

6. Transducteur selon la revendication 5, dans lequel la came (23) comporte un plan (68) sensiblement engendré par une spirale, plat, possédant un moyeu (72) monté au centre de génération de la spirale en vue d'un montage de la came sur le moteur (12).

7. Transducteur électro-pneumatique en vue de délivrer un signal de sortie pneumatique (22) variant en réponse à un signal d'entrée électrique (18), transducteur comportant:
un ajutage de contre-pression pneumatique (21);
un rétrécissement mobile (23) en vue de bloquer de façon variable l'ajutage (21) et ainsi modifier la contre-pression d'ajutage; et
un moteur (12) couplé au rétrécissement mobile (23) pour déplacer celui-ci par rapport à l'ajutage (21) en vue de bloquer de façon variable l'ajutage;
caractérisé en ce que;
le rétrécissement mobile (23) comporte une came rotative en vue de bloquer de façon variable l'ajutage (21);
un organe de manoeuvre (50) est prévu en vue d'actionner le moteur (12) en réponse à un signal de commande (48);
un organe (38) est prévu en vue de fixer un signal de point de consigne en réponse à signal d'entrée électrique (18) représentatif d'un signal de sortie pneumatique désiré;
un organe (26, 46) est prévu en vue de fixer un signal de rétroaction représentatif du signal de sortie pneumatique;
un organe de combinaison (42) est prévu en vue de comparer le signal de point de consigne au signal de rétroaction pour délivrer un signal de commande à l'organe de manoeuvre (50), et
une fixation d'ajutage (86) montée sur l'ajutage (21) et chargeant la came (23) en vue d'exercer une friction sur la came (23) en vue de maintenir un signal de sortie pneumatique (22) constant en provenance du transducteur correspondant au dernier signal électique d'entrée au transducteur à la suite d'une panne électrique.

8. Transducteur selon la revendication 7, dans lequel l'organe (26, 46) délivrant le signal de rétroaction comporte un transducteur de pression (26) mesurant le signal de sortie pneumatique du transducteur et délivrant un signal électrique représentatif de celui-ci.

9. Transducteur selon la revendication 8, dans lequel l'organe (26, 46) délivrant le signal de rétroaction comprend un circuit amplificateur (46) possédant un réglage de plage et de zéro (62, 60) pour permettre au signal de sortie pneumatique du transducteur d'être gradué sur une plage désirée de pressions de sortie à partir d'une pression de départ désirée.

10. Transducteur selon la revendication 7, la revendication 8 ou la revendication 9, dans lequel le moteur est un moteur à courant continu (12).

11. Transducteur selon une quelconque des revendications 7 à 10, dans lequel la came (23) comporte un plan sensiblement engendré par une spirale, plat (68) possédant un moyeu (72) monté au centre de génération en vue de fixer la came (23) sur le moteur (12).

12. Transducteur selon une quelconque des revendications 7 à 11, dans lequel l'ajutage de contre-pression (21) est relié à un ensemble de soufflet (74) pour pressuriser l'ensemble de soufflet en réponse à la pression provenant de l'ajutage de contre-pression.

13. Transducteur selon la revendication 12, dans lequel le soufflet (74) possède une sortie reliée à l'organe (26, 46) délivrant le signal de rétroaction.

14. Transducteur selon la revendication 12 ou la revendication 13, dans lequel l'ensemble de soufflet (74) comprend un soufflet (78) et un ressort réglable (80) monté en parallèle sur le soufflet en vue de régler la sortie de l'ensemble de soufflet.

15. Transducteur selon l'une quelconque des revendications 12 à 14, dans lequel l'ajutage de contre-pression (21) est fixé de façon rigide à l'ensemble de soufflet (74) pour se déplacer simultanément avec ce dernier.

16. Transducteur selon l'une quelconque des revendications 12 à 15, dans lequel l'ajutage de contre-pression (21) et l'ensemble de soufflet (74) sont fixés en un ensemble à un unique point de pivotement (88) permettant la rotation de l'ensemble des deux autour du point de pivotement en réponse à une dilatation ou à une contraction de l'ensemble de soufflet.

17. Transducteur selon l'une quelconque des revendications 7 à 16, dans lequel la fixation d'ajutage (86) comporte un élément possédant une extrémité montée sur l'ajutage de contre-pression (21) et une extrémité opposée en contact avec l'ensemble de came (23) sur un côté de celui-ci opposé à l'ajutage de contre-pression de façon à exercer une firction sur l'ensemble de came (23).

4-20 mA INPUT 18

POWER SUPPLY 16

V+ 28

V_REF.

DIFFERENCE AMPLIFIER 42

SETPOINT 30

FEEDBACK

ERROR 48

P + I CONTROLLER 50

56

14

10

D.C. MOTOR 12

58

V+ 31

COMMON 36

10Ω 34

DESIRED POSITION AMPLIFIER 38

40

44

V+ 33

SPAN ADJ. 62

AMPLIFIER CIRCUIT 46

ZERO ADJ. 60

32

PRESSURE TRANSDUCER 26

20.7-103.4 kPa 24

PNEUMATIC SERVO ASSY. 20

22

20.7-103.4 kPa OUTPUT

FIG. 1

12  21

23

FIG. 1a

0 120 594

FIG. 2

FIG. 3

FIG. 4

FIG. 5

0 120 594